# EUROPEAN PATENT SPECIFICATION

(11) **EP 1 568 279 B1**
(45) Date of publication and mention of the grant of the patent: **16.05.2007**
(21) Application number: 04425115.5
(22) Date of filing: 25.02.2004
(51) Int. Cl.: A21D 8/08, A21D 13/00, A21D 8/02, A21D 13/08

(54) **A process for the production of crackers**
Verfahren zur Herstellung von Keksen
Procédé de préparation de biscuits

(43) Date of publication of application: 31.08.2005
(73) Proprietor: Barilla G. e R. Fratelli S.p.A., 43100 Parma (IT)
(72) Inventor: Zanetti, Mario, I-29020 Gossolengo (Piacenza) (IT); Coscia, Luigi, I-43100 Parma (IT)
(74) Representative: Ferreccio, Rinaldo

(56) References cited:
- EP-A- 0 299 755
- EP-A- 0 358 456
- EP-A- 0 990 392
- WO-A-02/43498
- WO-A-88/06849
- DATABASE WPI Section Ch, Week 198747 Derwent Publications Ltd., London, GB; Class D13, AN 1987-331198 XP002288292 & JP 62 236445 A (YAMAZAKI NABISCO KK) 16 October 1987 (1987-10-16)
- PATENT ABSTRACTS OF JAPAN vol. 0135, no. 04 (C-653), 13 November 1989 (1989-11-13) & JP 1 202252 A (SANKO:KK), 15 August 1989 (1989-08-15)

## Description

### Field of Application

The present invention relates, in its more general aspect, to the technical sector of the foodstuff industry, and particularly to the sector of oven-baked foodstuff products.

More particularly the invention concerns a process for the production of crackers and similar crisp oven-baked bread substitute products of reduced thickness, that in the following description and the later claims will be identified by the term cracker.

### Prior Art

As is known, the consumption of foodstuffs like crackers is growing continually.

Such products are generally characterized by a composition of ingredients that is particularly balanced from the dietetic nutritional point of view, a characteristic that renders them particularly appreciated by the consumers.

A further advantageous characteristic lies in the extended shelf life of such products, that allows the consumer to have, on constant hand, a crisp and fragrant product as if just taken from the oven.

The constant success met with by crackers has determined, with the passage of time, their diffusion in a great assortment of forms available on the market.

Indeed it is sufficient to go into any food shop, even a small sized one, to understand the huge variety on offer of this kind of product.

It is worthwhile reminding, for example, crackers enriched with natural fiber, or else crackers seasoned with spices like chili, pepper, and fennel seeds, just to cite some of the more common ones.

Although crackers are widely used as bread substitutes, due to their goodness and the fact that they are sold advantageously in packages suitable for both domestic consumption and catering and, naturally, for the above mentioned characteristics, they are not without some inconveniences.

In fact, due to their flat shape, their consumption is directed mainly towards use in association with a restricted assortment of dishes, particularly condiments.

Indeed such a form is not particularly, or not at all, suitable for consumption in association with sauces, salsa, creams, creamy cheeses and typical condiments like the olive oil sauces of Italian culinary tradition.

In such cases a consistent and appreciable quantity of condiment cannot be scooped up effectively by dipping the cracker into the condiment itself.

Consequently, in these cases, preference is given to other types of product, like focaccia or bread that are able to collect or absorb the condiment; however such products must be consumed fresh, and there is therefore no guarantee for the consumer of their availability.

Therefore it would be a good thing to have available a cracker with an extended shelf-life and with the above mentioned advantageous nutritional characteristics, one that would also permit the scooping up of particular condiments like sauces, salsa, creams, creamy cheeses and oil-based sauces/creams

WO 02/43498 relates to an apparatus, method and a process for preparing a three dimensional foodstuff, more preferably a biscuit spoon, wherein a suitable dough composition is prepared and inserted into a mould for forming the desired shape. Once moulded, the dough can be partially baked to form a set biscuit spoon that can be removed and fully baked on suitable trays.

JP 62 236445 discloses a snack confectionery obtained by containing edible granular materials (e.g. sesame) freely floating in a hollow part of a snack confectionery body.

EP-A-0 299 755 discloses a concave shaped baked snack product coated with a particulate topping composition and a process for preparing it. The topping composition is made from a film-forming food starch and flavors and is applied to a sheeted dough prior to baking. During baking the topping composition becomes fused to the expanding dough base causing the edges of the dough sheet to lift up resulting in a desirable concave shaped coated snack product.

EP-A-0 358 456 discloses baked goods and in particular hard biscuits and crackers which are hollow and which are adapted to contain a filling.

EP-A-0 990 392 discloses a method of making a hollow baked confectionery, which comprises using a dough of a biscuit or a cracker capable of being formed into a sheet, forming said dough into a double sheet, shaping it through cutting, then subjecting said dough to alkali treatment, and conducting baking either without washing with water or after washing with water.

JP 1 202252 relates to a nonglutinous rice dough which is produced by the conventional technique and which is thinly extended to a desired thickness. The back surface of the resultant dough is then slightly dried by a hot-dry air, while the upper surface of the other extended dough is also dried in a similar manner to the above. Thence, the dried surfaces facing each other are superposed into a doubly superposed dough which is then rapped into dough pieces of desired shape. These pieces are then dried in an appropriate manner into dried dough, which is then coated with a seasoning liquid followed by baking, thus obtaining the hollow rice cracker.

WO 88/06849 discloses a method of producing a hollow food article comprising contiguously positioning at least two layers of starch-containing material to form a layered material wherein each of said layers has a limited affinity for the adjacent layer(s), shaping said layered material to form an uncooked food article, causing sealing of the interface between the adjacent layers at the extremities of the food article and cooking said food article in a manner such that steam generated within the food article during cooking forces adjacent layers apart at a point remote from the extremities of the food article while retaining contact between adjacent layers at the extremities of the food article.

### Summary of the invention

The problem at the base of the present invention has been that of making available a process for the preparation of a cracker with the above mentioned characteristics.

Such a problem has been solved, according to the invention, by a process for the production of crackers with a depression, comprising the steps of:
- obtaining a first and a second sheet of prefixed thickness from a risen dough used for crackers;
- spreading uniformly over said first sheet a prefixed quantity of a mixture in powder comprising at least one lipid and at least one alimentary flour;
- superimposing onto said first sheet said second sheet to obtain a composite sheet;
- making, from said composite sheet, single semi-finished products with a contour that essentially corresponds to that of the wanted product, and in which said first and second sheets are reciprocally united at said contour;
- subjecting said semi-finished products to baking, obtaining from each of them a hollow body;
- separating said hollow body into at least two concave parts constituting corresponding crackers.
   Preferably the mixture in powder is distributed in a quantity of between 0.2% and 5% by weight relative to the weight of the dough.
   Advantageously, the powder mixture includes a lipid in a quantity of between 5% and 50% by weight on the total weight of the dough.
   Among the lipids preference is given to fats of vegetal origin, and from among these vegetal fats margarine is preferred; nevertheless the possibility of using fats of animal origin is not excluded.
   Among the usable foodstuff flours we cite, by way of example, wheat starch, cornstarch either waxy or native, rice starch either modified or native, amioca starch, cornflour, soy flour, soft wheat flour, potato flour, durum wheat semolina, rice semolina and mixtures thereof.
   From among the said foodstuff flours wheat flours are preferred, and from among these the preference is soft wheat flour.
   The above said composite sheet has a thickness of between 5 mm and 1 mm, preferably a thickness of 2 mm, obtained by means of rolling.
   Further characteristics and advantages of the process according to the present invention will be more evident from the description of one of its preferred embodiments, given in the following, with reference to the attached drawings given as indicative and not limiting.

### Brief description of the drawings

- Figure 1 shows a perspective view of a cracker obtained by the process according to the present invention;
- Figure 2 shows a perspective view of a semi-finished product as it appears in an intermediate step of the process according to the invention;
- Figure 3 shows in a perspective view a hollow body obtained from the semi-finished product of figure 2 as it appears in a later step of the process according to the invention;
- Figure 4 shows two crackers as obtained from the hollow body of figure 3 at the end of the process;

### Detailed description

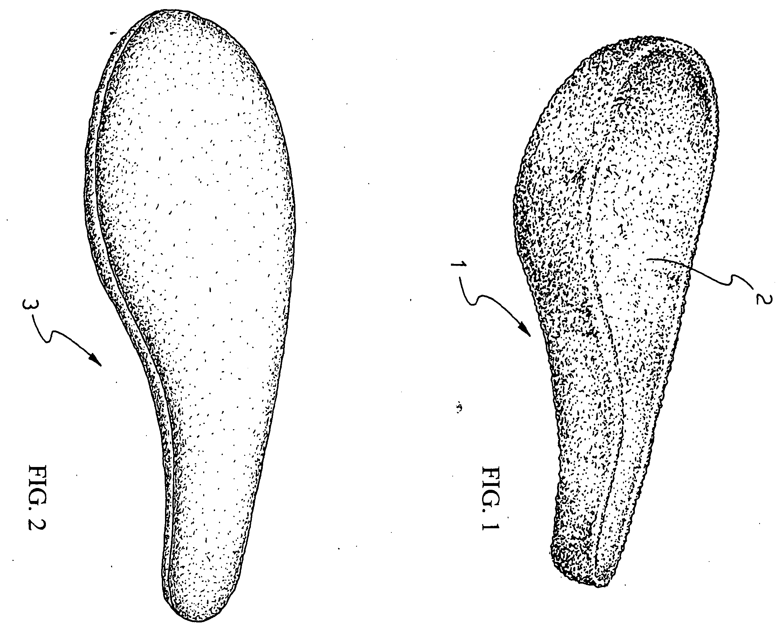

With reference to Fig. 1, a cracker 1 obtained by the process according to the invention consists essentially of a spoon shaped body with a concavity 2 that runs the full length of its surface.

To obtain such a cracker 1 there is first the preparation of a cracker dough from which to obtain, by means of a rolling step, a first and a second sheet of equal pre-fixed thickness of between 7 mm and 3 mm, preferably a thickness equal to about 5 mm.

In accordance with a feature of the present invention, on such a first rolled sheet there is the uniform distribution of a prefixed amount of a powder mixture, comprising a lipid and a foodstuff flour.

Following this, said second sheet is deposited on the first sheet, that is to say superimposed on the sheet covered with the powder mixture

The said first and second sheets, superimposed and including a prefixed amount of said powder mixture between them, form a composite sheet.

The quantity by weight of the powder mixture spread over the sheet is between 0.2% and 5% with respect to the weight of the said dough, a quantity that can vary in relation to the particle size of the mixture, of the type of lipid and of the amount of lipid present.

The quantity by weight of the lipid in the mixture is between 5% and 50% of the total weight of the mixture.

The smaller the particle size of the mixture, the smaller will be the quantity used for the dough.

For example, for mixture particles of a size between 10 µm and 50 µm, the quantity spread through the mixture is between 0.2% and 1% by weight with respect to the weight of the dough.

For particle sizes of between 200 µm and 400 µm, the quantity by weight of the mixture varies between 4% and 5% in relation to the weight of the dough.

Conveniently, said lipid and the said foodstuff flour consist of respectively a vegetal fat, preferably vegetal margarine, and a soft wheat flour.

The thus obtained composite sheet is subjected to a rolling step that results in a composite sheet of a prefixed desired thickness of between 3 mm and 1 mm, preferably equal to 2 mm

Following the said step of composite sheet rolling there is its cutting, that gives the semi-finished products 3 that have a contour substantially identical to that of the desired final product.

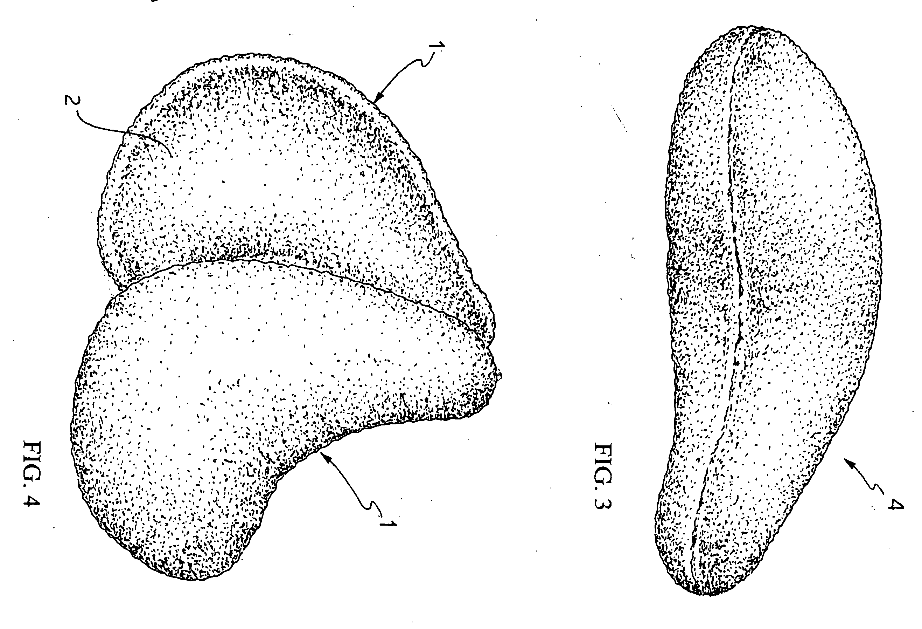

In particular, Fig. 2 shows a semi-finished product 3 as it is obtained following the cutting of the composite sheet.

The said semi-finished product 3 has a contour that substantially corresponds to that of the cracker represented in Fig. 1 but it is essentially flat.

In agreement with another feature of the process according to the present invention, in the semi-finished product 3, said first and second sheets are reciprocally united at said contour.

Such union is obtained by means of pressure that is exerted during the cutting.

In essence, the contact between the two sheets along the said contour defining the external border of a single semi-finished product 3 is far closer than in the remaining portion of the semi-finished product 3, where the sheets are simply superimposed and rolled.

This allows the semi-finished products 3 to develop, during subsequent heat treatment, the desired swelling while remaining in a closed body 4, and to separate into two respective crackers 1 only at the end of the said heat treatment.

The said single semi-finished products 3 then undergo said heat treatment, preferably baking in an oven on a light grill network at a temperature of between 180°C and 200°C for a time of between 5 and 8 minutes.

Fig. 3 shows a hollow body 4 obtained from a respective semi-finished product 3, as it appears during said cooking step, it particularly shows the swelling.

At the end of the cooking treatment there follows a separation step in which a single hollow body 4 is separated into two concave parts, identical mirror images, corresponding to two crackers 1 having the desired concavity 2.

In such step, the separation of a hollow body 4, with the obtaining of two crackers 1, can take place spontaneously or else the separation step can consist of light mechanical shaking; indeed the simple passage of a hollow body 4 on a conventional conveyer belt that leads to the subsequent packaging of the crackers can be sufficient to obtain separation into two concave parts.

With reference to figure 4 it can be noted that there are two crackers 1, mirror images, both with the desired concavity 2, as obtained from a hollow body 4 at the end of the separation step.

With reference to the said figures, the invention is now illustrated in greater detail by means of an example that is not limiting in realizing the process according to the invention.

### EXAMPLE

A pre-dough is prepared using the following ingredients, indicated in parts by weight.

| | |
|---|---|
| Soft wheat flour | 45% |
| Natural yeast | 3% |
| Water | 52% |

The above listed ingredients are mixed conventionally until a homogeneous pre-dough is obtained.

The said pre-dough is left to rise for 90 minutes in an environment with a relative moisture of 85% and a temperature of 26°C.

Starting from said pre-dough there is then the preparation of cracker dough using the following ingredients, indicated in parts by weight:

| | |
|---|---|
| Risen pre-dough | 40% |
| Soft wheat flour | 38.5% |
| Enzyme | 0.1% |
| Salt | 2% |
| Extra virgin olive oil | 13.5% |
| Natural yeast | 2.5% |
| Malt extract | 3.4% |

The above listed ingredients are mixed at low speed (20 rpm) for 8 minutes to obtain a homogeneous mixture that is left to rise in a cell at a temperature of 28°C at a relative moisture of 85% for a time period of 120 minutes.

Two 5 mm thick sheets of dough are obtained from the said risen dough, by means of rolling through a series of calibrating rollers.

On one of said two sheets there is uniformly spread a powder mixture comprising the ingredients reported below and indicated in weight percentages:

| | |
|---|---|
| vegetal margarine | 20% |
| soft wheat flour | 80% |

The said mixture is obtained by mixing the two ingredients at low speed (20 rpm) for about 10 minutes.

The dough is set to harden by refrigeration in a cell at 0° C for about 2 hours, then ground to form the said powder mixture.

The powder mixture is spread in a quantity that varies from 1 to 5% in weight with respect to the total weight of the dough.

The second sheet obtained earlier is at this point deposited onto the first sheet, that is to say it is superimposed on the sheet spread with the powder mixture.

From the said superimposed sheets, by means of rolling through a series of calibrating rollers, a 2 mm thick composite sheet is obtained.

Flat, substantially drop-shaped, single semi-finished products 3 are obtained from the composite sheet by means of pressure-cutting.

Such semi-finished products 3 are about 40 mm long and about 60 mm wide.

The semi-finished products 3 are then placed on a light grill network and cooked by baking in an oven, at a temperature of about 200°C for a time period of about 6 min.

During the said heat treatment there is the formation of each semi-finished product 3 from a respective hollow body 4.

Following said thermal treatment is a separation step in which each hollow body 4 is separated into two parts, identical mirror images, corresponding to the two crackers 1 having a concavity 2.

In such separation step, the sub-division of a hollow body 4 into the said two parts can take place spontaneously, or else can be achieved by light mechanical shaking, even just the passage of a hollow body 4 on a conventional transport conveyer belt that leads to the following cracker packaging can be sufficient to achieve the separation into two concave parts.

Each thus obtained cracker 1 has a concavity 2 that has a depth of about 18 mm.

Note how in the cracker 1 obtained by means of the process according to the present invention the surface with the concavity 2 is devoid of imperfections like secondary swellings, bubbles, filaments, trabeculae or peduncles.

Such a result is surprisingly achieved because of the singular composition of the powder mixture used.

In particular, the combined presence of the lipid and the foodstuff flour in the mixture lying between the first and the second sheets permits the semi-finished product 3 to rise during the baking, avoiding that in the course of the formation of the concavity 2 the said sheets remain united or stuck together, leading to the undesirable formation of the above imperfections.

Advantageously, the desired concavity can be obtained with prefixed curvature by means of an opportune choice of dosage for the foodstuff mixture, as well as through the choice of its composition.

Advantageously, at the end of the process according to the present invention, one obtains the crackers 1 with a concavity 2, having optimum characteristics of crunchiness and crispness and particularly suitable for consumption in association with condiments like sauces, salsa, creams, cream cheeses or oil-based sauces/creams, thanks to their peculiar form that allows such condiments to be scooped up.

Among other things, thanks to the greater crispness of the crackers with respect to bread and similar oven baked products traditionally consumed in association with the above cited condiments or liquid/cream foodstuffs, the consumer perceives, while tasting, a pleasant sensation of contrast supplied to the palate by the opposing cracker and condiment consistencies.

## Claims

1. A process for the production of crackers (1) having a concavity (2) comprising the steps of:
- obtaining a first and a second sheet of pre-fixed thickness from a risen cracker dough;
- distributing on said first sheet a prefixed quantity of a powder mixture comprising at least one lipid and at least one foodstuff flour;
- superimposing said second sheet onto said first sheet to obtain a composite sheet;
- making from said composite sheet, single semi-finished products (3) with a contour substantially corresponding to that of the product being produced and in which said first and second sheets are reciprocally united at said contour;
- subjecting said semi-finished products to baking, obtaining from each of them a hollow body (4);
- separating said hollow body (4) into at least two concave parts constituting corresponding crackers (1).

2. A process according to claim 1, in which said powder mixture is spread in a quantity of between 0.2% and 5% by weight relative to the weight of the dough.

3. A process according to claim 2, in which said powder mixture comprises as lipid a fat of vegetal origin in a quantity comprised between 5% and 50% by weight on total weight of the mixture.

4. A process according to claim 3, in which said fat of vegetal origin is vegetal margarine.

5. A process according to claim 4, in which said foodstuff flour is chosen from the group comprising wheat starch, cornstarch either waxy or native, rice starch either modified or native, amioca starch, corn flour, soy flour, soft wheat flour, potato flour, durum wheat semolina, rice semolina and mixtures thereof.

6. A process according to claim 5, in which said foodstuff flour is soft wheat flour.

7. A process according to claim 5, in which said foodstuff flour is durum wheat semolina.

8. A process according to claim 1, in which said composite sheet has a thickness of between 5 mm and 1 mm.

9. A process according to claim 8, in which said composite sheet has a thickness of 2 mm.

## Patentansprüche

1. Verfahren zur Herstellung von Crackern (1) mit einer Höhlung (2), folgende Schritte umfassend:
- Gewinnung einer ersten und zweiten Lage mit vorab festgelegter Dicke aus einem Cracker-Teig, der bereits gegangen ist;
- Verteilen auf der ersten Lage einer vorab festgelegten Menge eines Pulvergemischs, das zumindest ein Lipid und zumindest ein Nahrungsmittelmehl umfasst;
- Auflegen der zweiten Lage auf die erste Lage, um eine zusammengesetzte Lage zu erhalten;
- Herstellen von einzelnen, halbfertigen Produkten (3) aus der zusammengesetzten Lage, die eine Konturlinie haben, die im Wesentlichen derjenigen des erzeugten Produkts entspricht, und bei dem die erste und zweite Lage an der Konturlinie miteinander verbunden sind;
- Unterziehen der halbfertigen Produkte einem Backvorgang, wobei aus jedem von ihnen ein Hohlkörper (4) erhalten wird;
- Trennen des Hohlkörpers (4) in wenigstens zwei konkave Teile, die entsprechende Cracker (1) bilden.

2. Verfahren nach Anspruch 1, bei dem das Pulvergemisch in einer Menge zwischen 0,2 und 5 Gew.-% bezogen auf das Gewicht des Teigs ausgebreitet wird.

3. Verfahren nach Anspruch 2, bei dem das Pulvergemisch als Lipid ein Fett pflanzlichen Ursprungs in einer Menge zwischen 5 und 50 Gew.-% des Gesamtgewichts des Gemischs enthält.

4. Verfahren nach Anspruch 3, bei dem das Fett pflanzlichen Ursprungs Pflanzenmargarine ist.

5. Verfahren nach Anspruch 4, bei dem das Nahrungsmittelmehl aus der Gruppe ausgewählt ist, die Weizenstärke, Maisstärke wachshaltig oder nativ, Reisstärke modifiziert oder nativ, Amioca-Stärke, Maismehl, Sojamehl, Weichweizenmehl, Kartoffelmehl, Hartweizengrieß, Reisgrieß und Gemische davon umfasst.

6. Verfahren nach Anspruch 5, bei dem das Nahrungsmittelmehl Weichweizenmehl ist.

7. Verfahren nach Anspruch 5, bei dem das Nahrungsmittelmehl Hartweizengrieß ist.

8. Verfahren nach Anspruch 1, bei dem die zusammengesetzte Lage eine Dicke zwischen 5 mm und 1 mm hat.

9. Verfahren nach Anspruch 8, bei dem die zusammengesetzte Lage eine Dicke von 2 mm hat.

## Revendications

1. Procédé de fabrication de biscuits (1) présentant une concavité (2), le procédé comprenant les étapes suivantes :
- obtenir une première et une seconde couches d'épaisseur prédéterminée à partir d'une pâte à biscuit levée ;
- distribuer sur ladite première couche une quantité prédéterminée d'un mélange poudreux comprenant au moins un lipide et au moins une farine alimentaire ;
- superposer ladite seconde couche sur ladite première couche pour obtenir une couche composite ;
- à partir de la couche composite, faire des produits semi-finis (3) unitaires avec un contour correspondant sensiblement à celui du produit final fabriqué et dans lesquels lesdites première et seconde couches sont réciproquement unies selon ledit contour ;
- soumettre lesdits produits semi-finis à la cuisson pour obtenir un corps creux (4) à partir de chaque produit semi-fini ;
- séparer ledit corps creux (4) en au moins deux parties concaves constituant les biscuits (1) ;

2. Procédé selon la revendication 1, dans lequel ledit mélange poudreux est saupoudré dans des quantités en poids allant de 0,2% à 5% du poids de la pâte.

3. Procédé selon la revendication 2, dans lequel ledit mélange poudreux comprend pour lipide une graisse d'origine végétale dans des quantités en poids allant de 5% à 50% du poids total du mélange poudreux.

4. Procédé selon la revendication 3, dans lequel la graisse d'origine végétale est une margarine végétale.

5. Procédé selon la revendication 4, dans lequel ladite farine alimentaire est choisie dans le groupe comprenant de la fécule de blé, de la fécule de maïs cireuse ou naturelle, de la fécule de riz modifiée ou naturelle, de la fécule d'amioca, de la farine de maïs, de la farine de soja, de la farine de blé doux, de la farine de pomme de terre, de la semoule de blé dur, de la semoule de riz et leurs mélanges.

6. Procédé selon la revendication 5, dans lequel ladite farine alimentaire est de la farine de blé doux.

7. Procédé selon la revendication 5, dans lequel ladite farine alimentaire est de la semoule de blé dur.

8. Procédé selon la revendication 1, dans lequel ladite couche composite a une épaisseur comprise entre 5mm et 1 mm.

9. Procédé selon la revendication 8, dans lequel ladite couche composite a une épaisseur de 2mm.
